# EUROPÄISCHE PATENTSCHRIFT

(11) **EP 1 072 352 B1**
(45) Veröffentlichungstag und Bekanntmachung des Hinweises auf die Patenterteilung: **26.01.2005**
(21) Anmeldenummer: 00114199.3
(22) Anmeldetag: 14.07.2000
(51) Int. Cl.: B23K 35/02, B23K 9/20

(54) **Verbundwerkstück bestehend aus einem Bauteil aus Nicht-Al-Metall und einem Verbindungsstück aus Aluminium sowie Verwendung eines derartigen Verbundwerstückes**
Composite body consisting of a structural body made from a metal other than Al and of a connecting element of aluminum and use of the composite body
Corps composite consistant en un élément structurel fabriqué à partir d'un matériau autre que l'aluminium et en un connecteur en aluminium, et utilisation d'un tel corps

(30) Priorität: 30.07.1999 DE 19935980
(43) Veröffentlichungstag der Anmeldung: 31.01.2001
(73) Patentinhaber: KNORR-BREMSE Systeme für Schienenfahrzeuge GmbH, 80809 München (DE)
(72) Erfinder: Rothgängel, Kurt, 80687 München (DE); Englberger, Severin, 94342 Irlbach (DE)

(56) Entgegenhaltungen:
- GB-A- 715 259
- GB-A- 1 431 219
- US-A- 4 085 307
- US-A- 4 684 304

## Beschreibung

Die Erfindung betrifft ein Verbundwerkstück bestehend aus einem Bauteil aus Nicht-Al-Metall sowie aus einem Verbindungsstück aus Aliminium und darüber hinaus, die Verwendung eines derartigen Verbundwerkstückes.

Es ist bekannt, dass aus Nicht-Al-Metall bestehende Bauteile praktisch nur durch das bekannte Reibschweißen wirtschaftlich mit einem aus Aluminium gefertigten Werkstück im Schweißverfahren verbunden werden können.

Aus der GB-A 1 431 219 ist ein Kabelschuh 2 zur Verbindung eines elektrischen Leiters aus Aluminium mit einem Leiterstab 1 aus Kupfer bekannt. Der Leiter aus Aluminium ist in einem Hohlraum 2b eines ersten Kabelschuhabschnittes 2a aus Aluminium gehalten, welcher erste Kabelschuhabschnitt 2a mit einem zweiten Kabelschuhabschnitt 2c aus Kupfer durch Reibschweißen entlang der Fläche 2e verbunden ist. Der Leiterstab 1 aus Kupfer ist am zweiten Kabelschuhabschnitt 2c mittels einer Schraube 3 angeklemmt.

Die US-A-4 684 304, Figur 1, beschreibt einen der Verbindung mit einem Stahlbauteil dienenden Bolzen 10, dessen aus einer Nickellegierung bestehende Hauptabschnitt 12, 13 mit einem Spitzenabschnitt 11 aus Stahl durch Reibschweißen verbunden ist.

Aufgabe der vorliegenden Erfindung ist es, eine Verbesserung der Verbindung zwischen dem Bauteil bzw. Bolzen und einem damit z. B. durch Schweißen zu verbindenden Werkstück zu erreichen.

Die Lösung dieser Aufgabe besteht in einem Verbundwerkstück bestehend aus inem Bauteil aus Nicht-Al-Metall, insbesondere nichtrostendem Stahl, mit einem Bolzen und einem an dessen einem Ende angeordneten Flansch, sowie aus einem kegeligen Verbindungsstück aus Aluminium, welches mit dem Flansch durch Reibschweißen verbunden ist.

Durch den Flansch wird eine Vergrößerung der Verbindungsfläche zwischen dem Bolzen und dem Verbindungsstück erreicht, wobei die Kegelform des Verbindungsstückes besonders für die Verbindung des Verbundwerkstückes mit einem Werkstück durch Schweißen oder Löten geeignet ist.

Der vorliegenden Erfindung liegt insoweit der Gedanke zugrunde, ein aus Nicht-Al-Metall bestehendes Bauteil, beispielsweise einen Bolzen oder einen an einem stirnseitigen Ende mit einem Flansch versehenen Bolzen in einem separaten Arbeitsschritt im bekannten Reibschweiß-Verfahren mit einem kegeligen Verbindungsstück aus Aluminium fest zu verbinden, welches dann dazu benutzt werden kann, das erhaltene Verbundwerkstück auf wirtschaftliche Art und Weise an einem aus Aluminium gefertigten Werkstück festlegen zu können.

Hierfür sind wirtschaftliche Schweiß- oder Lötverfahren bekannt. Dabei handelt es sich z. B. um das sogenannte Bolzen-Schweißen (siehe DE 195 39 791 A1), das WIG-Schweißen oder auch das Hartlöten.

Die Verbindung zwischen dem aus Nicht-Al-Metall hergestellten Bolzen mit einem entsprechenden Verbindungsstück, kann in praktisch allen Fällen im wirtschaftlichen Reibschweiß-Verfahren erfolgen, so dass zwar auf der einen Seite ein gewisser Mehraufwand durch die Verbindung zwischen dem aus Nicht-Al-Metall hergestellten Bolzen und dem Verbindungsstück in Kauf genommen werden muss, dafür wird aber sicher gestellt, dass das Verbundwerkstück einfach, sicher und preiswert an einem aus Aluminium bestehenden Werkstück angeschweißt oder angelötet werden kann.

Eine Weiterentwicklung der Erfindung besteht darin, dass sowohl das Bauteil wie auch das Verbindungsstück rotationssymmetrisch ausgebildet sind

Eine andere, ebenfalls vorteilhafte Ausführungsform des Erfindungsgegenstandes besteht darin, dass das Bauteil und/oder das Verbindungsstück einen unrunden Querschnitt aufweisen, im Verbindungsbereich aber durch eine rotationssymmetrische Schweißzone miteinander verbunden sind.

Die Erfindung betrifft weiterhin die Verwendung eines Verbundwerkstückes der vorgenannten Art, wobei an dem Verbindungsstück ein aus Aluminium hergestelltes Werkstück durch Schweißen oder Löten festgelegt wird.

Das Verbundwerkstück kann an dem aus Aluminium hergestellten Werkstück im Bolzenschweiß-Verfahren, WIG-Schweiß-Verfahren oder durch Löten, insbesonderer Hartlöten, an dem aus Aluminium hergestellten Werkstück festgelegt werden.

Die Erfindung wird anhand der beigefügten Zeichnung im folgenden noch einmal ausführlich erläutert.

Es zeigen:
- Figur 1: eine perspektivische Darstellung eines erfindungsgemäßen Verbundwerkstückes zur Festlegung an einem aus Aluminium gefertigten Werkstück
- Figur 2: eine Seitenansicht des Verbundwerkstückes gemäß Figur 1

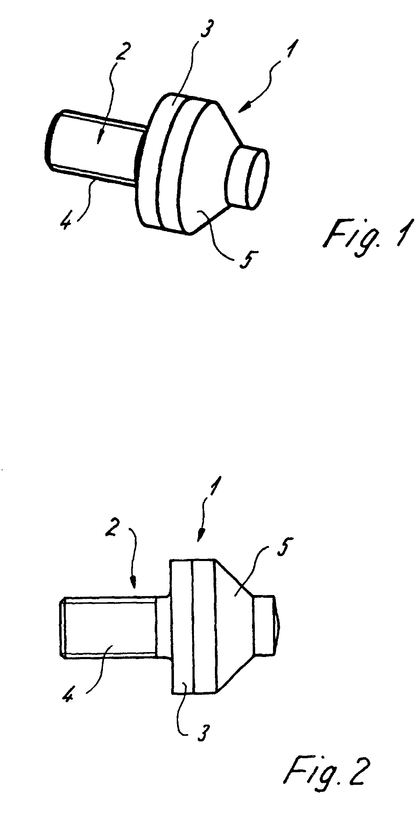

In den Figuren 1 und 2 ist mit dem Bezugszeichen 1 insgesamt ein Verbundwerkstück bezeichnet, welches zur Festlegung an einem (nicht dargestellten), aus Aluminium gefertigten Werkstück bestimmt ist.

Das Verbundwerkstück 1 besteht aus einem aus Nicht-AL-Metall, insbesondere aus nichtrostendem Stahl, hergestellten Bauteil 2, hier in Form eines mit einem Flansch-3 versehenen Bolzens 4 und aus einem Verbindungsstück 5 aus Aluminium. Das aus Nicht-AL-Metall gefertigte Bauteil 2 ist mit dem Verbindungsstuck 5 aus Aluminium im bekannten Reibschweiß-Verfahren fest verbunden. Das dieser Art gebildete Verbundwerkstück 1 kann nun auf wirtschaftlich vernünftige Art und Weise an einem aus Aluminium hergestellten Werkstück festgelegt werden, und zwar durch alle für die Verbindung von Aluminiumwerkstücken untereinander geeignete Fügeverfahren, insbesondere durch das bekannte Bolzenschweiß-Verfahren, oder durch das WIG-Schweiß-Verfahren oder durch Hartlöten. Bevorzugt besteht das Verbundwerkstück 1 aus ausschließlich rotationssymmetrischen Teilen, wobei dies allerdings nicht zwingend notwendig ist. Grundsätzlich können auch nicht rotationssymmetrische Teile im Reibschweiß-Verfahren miteinander verbunden werden So kann beispielsweise ein Sechskantstab aus Nich-Al-Metall auf einer Platte aus Aluminium festgelegt werden, wobei dann die Verbindung im Schweißbereicn rotationssymmetrisch sein wird.

Anwendungsfälle zur Nutzung erfindungsgemäßer Verbundwerkstücke sowie der erfindungsgemäßen Verwendung sind Erdungsbolzen für Aluminium-Teile insbesondere Aluminium-Arme, Aluminium-Träger oder dergleichen

## Patentansprüche

1. Verbundwerkstück bestehend aus einem Bauteil (2) aus Nicht-Al-Metall, insbesondere nichtrostendem Stahl mit einem Bolzen (4) und einem an dessen einem Ende angeordneten Flansch (3), sowie aus einem kegeligen Verbindungsstück (5) aus Aluminium welches mit dem Flansch (3) durch Reibschweißen verbunden ist.

2. Verbundwerkstück nach Anspruch 1, **dadurch gekennzeichnet, dass** sowohl das Bauteil (2) wie auch das Verbindungsstück (5) rotationssymmetrisch ausgebildet sind.

3. Verbundwerkstück nach Anspruch 1, **dadurch gekennzeichnet, dass** das Bauteil (2) und/oder das Verbindungsstück (5) einen unrunden Querschnitt aufweisen, im Verbindungsbereich aber durch eine rotationssymmetrische Schweißzone miteinander verbunden sind.

4. Verwendung eines Verbundwerkstückes nach einem der vorgeordneten Ansprüche, wobei an dem Verbindungsstück (5) ein aus Aluminium hergestelltes Werkstück durch Schweißen oder Löten festgelegt wird.

## Claims

1. Composite work piece consisting of a component (2) of a non-Al metal, in particular stainless steel, comprising a bolt (4) and a flange (3) provided on one end thereof, as well as of a conical connecting element (5) made of aluminium, which is connected to said flange (3) by friction welding.

2. Composite work piece according to Claim 1, **characterised in that** both said component (2) and said connecting element (5) present a rotationally symmetrical configuration.

3. Composite work piece according to Claim 1, **characterised in that** said component (2) and/or said connecting element (5) present(s) a cross-sectional shape other than round but that they are connected to each other in the connecting region by a rotationally symmetrical welding zone.

4. Application of a composite work piece according to any of the preceding Claims, wherein a work piece made of aluminium is fixed on said connecting element (5) by welding or soldering.

## Revendications

1. Pièce d'oeuvre composite composé d'un composant (2) en un métal autre que Al, en particulier acier inoxydable, comprenant un goujon (4) et une bride (3) formée à une extrémité du goujon, ainsi que d'une pièce de jonction conique (5) faite en aluminium, qui est raccordée à ladite bride (3) par soudure par friction.

2. Pièce d'oeuvre composite selon la revendication 1, **caractérisée en ce que** ledit composant (2) ainsi que ladite pièce de jonction (5) présentent une configuration à symétrie de révolution.

3. Pièce d'oeuvre composite selon la revendication 1, **caractérisée en ce que** ledit composant (2) et/ou ladite pièce de jonction (5) présente(nt) un profil en travers autre que rond, mais qu'ils sont reliés l'un à l'autre dans la section de raccord par une zone de soudure à symétrie de révolution.

4. Emploi d'une pièce d'oeuvre composite selon une quelconque des revendications précédentes, dans lequel une pièce d'oeuvre faite en aluminium est fixée à ladite pièce de jonction (5) par soudure ou brasage.
